# EUROPEAN PATENT SPECIFICATION

(11) **EP 3 430 693 B1**
(45) Date of publication and mention of the grant of the patent: **12.10.2022**
(21) Application number: 16804920.3
(22) Date of filing: 15.04.2016
(51) Int. Cl.: H02G 1/02, H02G 7/00

(54) **SMART SPACER AND METHOD FOR OVERHEAD TRANSMISSION LINE MONITORING**
INTELLIGENTER ABSTANDSHALTER UND VERFAHREN ZUR ÜBERWACHUNG EINER FLURFREIEN ÜBERTRAGUNGSLEITUNG
ESPACEUR INTELLIGENT ET PROCÉDÉ DE SURVEILLANCE DE LIGNE DE TRANSMISSION AÉRIENNE

(43) Date of publication of application: 23.01.2019
(73) Proprietor: Siemens Energy Global GmbH & Co. KG, 81739 München (DE)
(72) Inventor: SOBOLEV, Sergey Pavlovich, Saint-Petersburg 198332 (RU)
(86) International application number: PCT/RU2016/000217
(87) International publication number: WO 2017/180008

(56) References cited:
- WO-A1-2007/031435
- WO-A2-2011/119065
- WO-A2-2013/030796
- CN-A- 103 178 902
- JP-A- H05 191 909
- US-A- 5 140 257
- XIAO MING RUI ET AL: "Design of a New Spacer Damper for Bundle Power Transmission Lines Dynamic Behavior Monitoring Based on Fiber Bragg Grating Sensor", APPLIED MECHANICS AND MATERIALS, vol. 368-370, 30 August 2013 (2013-08-30), pages 712-715, XP055336365, DOI: 10.4028/www.scientific.net/AMM.368-370.712

## Description

The present invention generally relates to the field of an electric transmission and distribution monitoring system. More particularly the invention relates to remote online condition monitoring of overhead transmission lines by a comprehensive online sensing and monitoring network. Transmission lines that are used to transmit electrical energy are often characterized as high voltage lines, extra high voltage (EHV) lines, and ultra high voltage (UHV) lines. The voltage levels in each category are approximately less than 300 kilovolts (kV), 300kV to 500kV, and over 500kV, respectively. Transmission lines that are in the category of EHV and UHV are referred to as bulk power transmission lines, meaning that power is transferred along the lines from a generating point to a distribution point over great distances which can be as much as several hundred miles.

The tranmission line according to the present invention is an overhead transmission line. Such an overhead transmission line comprises a plurality of conductors for transmitting electrical power as described above. The conductors are located several feet over ground, carried by suitable towers which are typically spaced from each other several hundred feet. So called spacers and/or spacer-dampers are used to keep the conductors of the overhead transmission line in a bundle, i.e. to keep them at a given minimum distance from each other to avoid short circuits between the conductors and, typically at the same time, to keep them close to each other and at a given maximum distance, respectively. Typically, the spacing of the spacers from each other along the overhead transmission line is about 200 feet. Therefore there can be approximately fifty spacer units per mile of the overhead transmission line. Spacers and / or spacer-dampers are well known and for example described in US 5,362,920.

Overhead transmission lines are the one of the most diversely located assets within the utility industry, traversing thousands of miles, often in remote conditions. They may be located in open farmlands, or hilly terrain, or up and down a mountainside. In general, the proper maintenance of the transmission lines, including the overhead transmission lines, is of vital importance, since any problem may result in the interruption of electricity supply with many negative impacts to health, sanitation, transportation and safety.

Increased reliability requirements, aging of components and budget constraints increase the need for thorough, timely, and cost-effective inspections along the entire length of the transmission lines.

One of the essential parts of an overhead transmission line network are the conductors used for transmitting the electrical power between connected stations, e.g. between the generating point and the distribution point. Preventive maintenance of the conductors and monitoring of different parameters including conductor temperature, electrical current in the overhead transmission line, 3D mechanical oscillations of the conductors, conductor sway and sag, conductor icing, as well as air parameters around conductors such as temperature and humidity, is the best way to avoid problems with the infrastructure of the overhead transmission line.

State of the art transmission line inspection involves workers on lines and/or helicopter support. Therein, inspections on foot need a lot of time and in some situations are even impossible due to difficult terrain such as mountains or steep valleys. While monitoring the overhead transmission lines, workers must move on the lines several tens of meters above the ground, in very demanding and stressful conditions. In order to make this work safer, sometimes the transmission of electricity is interrupted for the inspection operation. However, this may not be possible at all times, since it would overcharge other parallel lines.

The helicopter missions are somewhat quicker but very costly, tedious and difficult, especially for the pilot, since he needs to fly at minimum distance to the conductors of the overhead transmission line. The possibility of strong side winds additionally turns this task into a dangerous situation. Even though a video shot from the helicopter provides general information regarding the conditions of the overhead transmission line, this method cannot provide details of the line regarding scratches, minor faults or corrosion, which are early signs of problems that must be repaired before the line is seriously damaged.

Another way to provide transmission line inspection is to use unmanned aerial systems. Drones can glide over rugged terrain, where it is hard for utility workers to get around, and send back pictures showing the condition of conductors. The use of drones might cut utility costs and improve worker safety, both for routine inspections and for surveying damage to overhead transmission line networks after natural disasters. However, regulation may be more of an obstacle. Rules require drone operators to be licensed pilots or specially trained, and they must keep aircraft within eyesight and below 400 feet in altitude. So it means this way of inspection also involves workers to move along the transmission lines during the inspection. In addition to that the parameters related to the conductors themselves, for example temperature of the conductors, are not available by using such unmanned aerial systems.

Another way to provide overhead transmission line monitoring is to use transmission line inspection robots that are designed to travel on the transmission line conductors and identify high-risk vegetation, and component conditions using a variety of inspection technologies. Such robots can be equipped with different sensors to perform detailed inspection. The main challenge of this approach is the time gap between the on-site picture and / or video acquirement and afterward analysis. The videos and information are often handed in for off-site expert analysis after the on-site crew finishing the on-site task and going back to the office. In many cases, the on-site place is hundreds or thousands kilometers away from the office and it may take substantial time for picture / video analysis after the on-site work. It greatly delays the progress of the whole power line inspection task.

XIAO MING RUI ET AL. describe in "Design of a New Spacer Damper for Bundle Power Transmission Lines Dynamic Behavior Monitoring Based on Fiber Bragg Grating Sensor" a spacer damper which can also detect the torsion motion of each sub-conductor of a bundle cable, with consideration of the special configurations of bundle cables. The spacer damper is integrated with fiber bragg grating sensors.

WO 2013/030796 A2 discloses a sensor system for monitoring temperature loads and other impacts on electrical supply installations, where the sensor devices are electrically connected to the electrical supply installation which serves as energy source for the sensor devices.

WO 2011/119065 A2 describes a remote monitoring device for overhead transmission line configured to be mounted directly to overhead line.

US 5 140 257 A discloses a method for monitoring the current carrying capacity of a length of an overhead electrical power line

JP H05 191909 A discloses a way to make it possible to execute maintenance by installing vibration sensors to overhead lines, transmitting the output of the sensors from a transmitter and receiving and monitoring the output by a monitoring portion. Thereto, a signal detected by a vibration sensor is transmitted from a transmitter of an air unit suspended from an overhead line to a ground unit in the form of radio waves. Thus, the vibration state of the overhead line can be automatically monitored and analysed for 24 hours by recording and analysing the signals received by the monitor unit in the ground unit, and proper alarm can be generated as required.

In general, the existing ways of transmission line monitoring are complex, time consuming, costly, require very sophisticated equipment, and are sometimes even dangerous.

In the light of the foregoing discussion, it is evident that there is a strong need of real-time monitoring of overhead transmission lines.

The object is solved by a system and by a method for overhead transmission line monitoring as defined in the independent claims.

A smart spacer for overhead transmission line monitoring suitable for measuring at least one parameter of the condition of the overhead transmission line is adapted for bundling at least two conductors of the overhead transmission line and comprises at least one sensor placed on the spacer. The sensor is suited for measuring at least one parameter of the condition of the overhead transmission line and adapted to provide data, which data comprises information about the measured parameter. Such information about the measured parameter can comprise the measured parameter itself and/or a result of processing the measured parameter by the at least one sensor.

The present invention provides a system for the overhead transmission line monitoring comprising at least two smart spacers. Each of the smart spacers is adapted for bundling at least two conductors of the overhead transmission line and each of the smart spacers comprises
at least one sensor which is placed on the smart spacer, suited for measuring at least one parameter of a condition of the overhead transmission line, and adapted to provide data, which data comprises information about the measured parameter, and
at least one data transmission unit adapted to receive the provided data from the at least one sensor and from other sensors, and to send the provided data and data received from the other sensors to a data receiver.

Moreover at least one smart spacer of the system is a slave smart spacer and at least one smart spacer of the system is a master smart spacer.

The slave smart spacer is adapted to measure at least one parameter of a condition of the overhead transmission line where it is located and to send data which comprises information about the measured parameter to the master smart spacer. The master smart spacer is adapted to measure at least one parameter of a condition of the overhead transmission line in the area where it is located, to receive the data from the slave smart spacer, and to send the data which comprises information about the measured parameters and the data received from the slave spacer to an information system.

Furthermore, the present invention provides a method for overhead transmission line monitoring based on the measurement of the at least one parameter by the system for overhead transmission line monitoring that comprises at least two smart spacers mentioned introductorily. Therein, at least one smart spacer of the system is a slave smart spacer and at least one smart spacer of the system is a master smart spacer. Each of smart spacers is adapted to measure at least one parameter of a condition of the overhead transmission line in the area where it is located. As mentioned introductorily the smart spacers are adapted for bundling at least two conductors of the overhead transmission line and suited for measuring the at least one parameter of the condition of the overhead transmission line. Furthermore the spacers comprise at least one sensor which is placed on the smart spacers, suited for measuring at least one parameter of a condition of the overhead transmission line, and adapted to provide data, which comprises information about the measured parameter. After the step of measuring the measured data are evaluated.

The system measures the at least one parameter of the condition of the overhead transmission line. The slave smart spacer sends the data measured by the slave smart spacer to the master smart spacer. The master smart spacer receives the data provided by the slave smart spacer. The data provided by the sensor located on the master smart spacer and the data received from the slave smart spacer are transmitted from the master smart spacer to the information system. After that the measured data is evaluated.

This embodiment allows processing and compiling more comprehensive data about the condition of the overhead transmission line along the overhead transmission line. In an ideal case the data about the condition of the overhead transmission line in particular location where the smart spacer is placed is observed in on-line way. Therefore the real-time diagnostic data is available.

The present invention is based on the insight that the spacers mentioned introductorily, as soon as they are equipped with suitable sensors, can be used for monitoring an overhead transmission line.

The main objective of the spacer is to bundle the conductors, i.e. to keep the conductors together in a bunch, but to provide proper separation of the conductors, in other words is at least not to allow conductors to come in touch with each other since this would result in a short circuit. However, there are additional requirements to the distance between the conductors that depend on voltage level, conductor section, conductor materials, etc. So, the distance between two neighboring spacers is defined by calculations. In some cases the conductors are separated by a fixed distance, usually 18 inches. Modern spacers are called spacer-dampers because they combine the function of spacing the bundle with the damping of the vibration of the individual conductors in the bundle.

Such smart spacers being equipped additionally with sensors gets additional functionality and can be used for measuring different parameters of the overhead transmission lines, such as conductor temperature, electrical current in the overhead transmission line, 3D mechanical oscillations of the conductors, conductor sway and sag, conductor icing, as well as air parameters around conductors such as temperature and humidity, etc.

Thus, the invention can be used to effectively monitor the condition of the overhead transmission line.

Further embodiments of the present invention are subject of the further sub-claims and of the following description, referring to the drawings.

In a possible embodiment the smart spacer can comprise a data transmission unit adapted to receive the data which includes information about the measured parameter from the at least one sensor that is placed on the smart spacer. So data that comprises the measured parameters from all sensors, that are located on the smart spacer, is transmitted to the data transmission unit. Furthermore the data transmission unit is adapted to send these data received from the sensors to a data receiver, that might be other transmission unit located on the other smart spacer, and / or an information system that is adapted to process data, and / or any other receiver that is adapted to receive the data for any other purposes. Thus, the smart spacer is not only measuring the parameters, but also making them available for further processing by transmitting these data out.

In another possible embodiment in addition to the above described embodiment the data transmission unit is adapted to receive data from other sensors, e.g. from other sensors that are placed on the same smart spacer and / or on the other smart spacers, and / or from other sensors that are located on any other equipment, for example on the overhead transmission line towers, or at compression connectors, even from sensors placed on other monitoring devices, for example, drones and / or robots.

Furthermore the data transmission unit is adapted to send all received data, both from the at least one sensor and / or from other sensors, to the data receiver, wherein the data receiver can be a data transmission unit of another smart spacer and / or an information system that are able to accept these data and to process these data, for example store them, make any calculations, execute some commands etc.

In an enhanced embodiment the smart sensor can comprise as many sensors as needed to measure all required parameters. Also each such sensor can be adapted to measure more than one parameter.

This allows gathering data that comprise information about the condition of the overhead transmission line from different sources and make these data available for further processing.

In an enhanced embodiment the data transmission unit is adapted to either receive the data from other sensors via the overhead transmission line, or to send the provided data and the data received from the other sensors via the overhead transmission line, or to provide the exchange of any data via the overhead transmission line in both ways. It allows arranging an exchange of information between the smart sensors and the data receivers through already existing infrastructure.

The smart spacer contains an energy storing unit, for example a battery or a capacitor, that provides energy for operating the at least one sensor and the data transmission unit and / or any other electrical consumers that are placed on the smart spacer. The advantage is to provide autonomous, self-powered operation of the smart spacer, especially in case of short term lack of power.

The smart spacer is powered from the overhead transmission line. I.e. any electrical consumers located on the smart spacer such as the data transmission unit, the sensor, the energy storing unit, etc. is powered from the overhead transmission line. The advantage is to provide autonomous, self-powered operation of the smart spacer suited for long-term operation. In particular, the smart spacer equipped with the energy storing unit allows to provide recharging such energy storing unit as it is required.

The smart spacer is adapted to be powered from the overhead transmission line and in case of a power cut on the overhead transmission line, i.e. when there is no more energy for further smart spacer operation, the energy storing unit located on the smart spacer is adapted to provide enough energy to enable a transmission of data which comprises at least information about the power cut, wherein the information can include in the easiest case only one bit information consisting of zero in case of power cut. In an ideal case, when the power cut has occurred, all data comprising the measured parameters and the data received from the other sensors also are transmitted to the data receiver. The benefit of this feature is that no data will be lost in emergencies such a power cut. Additionally operators will get the information about the failure on the overhead transmission line.

In one possible embodiment the method for the overhead transmission line monitoring comprises the step of transferring the measured data from the smart spacer to a data receiver that is performed between the step of measuring the at least one parameter of the condition of the overhead transmission line by the at least one smart spacer and the step of evaluating the measured data. So, in case the smart spacer is additionally equipped with a data transmission unit, the measured data can be transferred for further evaluation to other data receivers, for example to an off-site information system where further data processing is provided.

In the enhanced embodiment of the method of the overhead transmission line monitoring the master smart spacer receives the data from other sensors. After that the master smart spacer transmits the data from the other sensors along with the data provided by the sensor located on the master smart spacer and the data received from the slave smart spacer to the information system. This feature allows compiling comprehensive data about the condition of the overhead transmission line along the overhead transmission line.

In the enhanced embodiment of the method the monitoring of the overhead transmission line is provided by the system comprises at least three smart spacers. Furthermore the route of transmitting the data from the smart spacers to the information system is dynamically defined based on availability of the smart spacers. Therefore the data transmission can be arranged in more effective way taking into account availability of transmission units of other smart spacers within the smart spacer network, and / or any other criteria, for example the criteria of the shortest way between the smart spacer and the information system.

For a more complete understanding of the present invention and advantages thereof, reference is now made to the following description taken in accompanying drawings. The invention is explained in more detail below using exemplary embodiments which are specified in the schematic figures of the drawings, in which:
- Fig. 1: shows a block diagram of the smart spacer according to the present invention;
- Fig. 2: shows a block diagram of another embodiment of the smart spacer according to the present invention;
- Fig. 3: shows a block diagram of the system according to the present invention;
- Fig. 4: shows a block diagram of a method for the overhead transmission line monitoring according to the present invention;
- Fig. 5: shows a block diagram of an embodiment of a method for the overhead transmission line monitoring according to the present invention;
- Fig. 6: shows a block diagram of another embodiment of a method for the overhead transmission line monitoring according to the present invention;

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practice without these specific details.

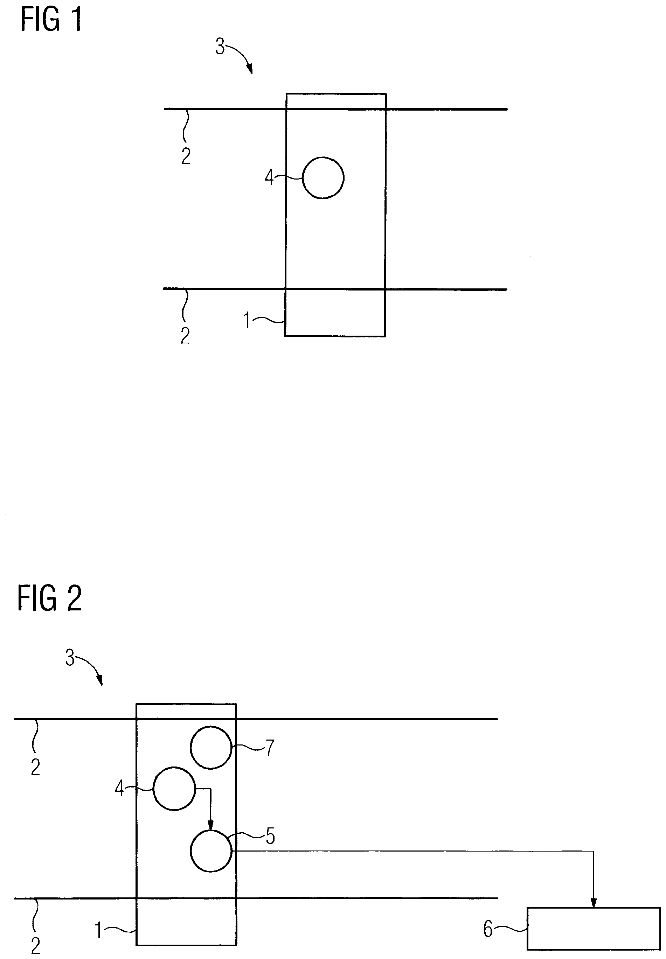

FIG 1 illustrates a block diagram of a first embodiment of a smart spacer 1 for overhead transmission line monitoring. The smart spacer 1 is adapted for bundling at least two conductors 2 of an overhead transmission line 3 and comprises at least one sensor 4 placed on it. The sensor 4 is adapted to measure at least one parameter of a condition of the overhead transmission line 3 and to provide data after measuring, which data comprises information about the measured parameter. The measured parameters might be at least one parameter of the condition of the overhead transmission line 3, for example conductor temperature, electric current in the overhead transmission line 3, 3D mechanical oscillations of conductors, conductor sway and sag, conductor icing, air parameters around the conductors such as temperature and humidity.

The location of the sensor 4 on the smart spacer 1 depends on the type of the sensor 4, necessity of direct contact with the conductor 2, available space of the smart spacer 1, etc.

The smart spacer works as follows: the sensor 4 measures at least one parameter of a condition of the overhead transmission line 3 and provides data after measuring, which data comprises information about the measured parameter. The information provided by the sensor 4 might comprise the measured parameter itself and / or data related to this measured parameter processed by the sensor 4. After that the data provided by the sensor 4 is evaluated to define the condition of the overhead transmission line 3 to enable the monitoring of the overhead transmission line 3.

FIG 2 shows an enhanced, second embodiment in which the smart spacer 1 in addition to the sensor 4 comprises a data transmission unit 5 that is adapted to receive data from the sensor 4 and to send the provided data to a data receiver 6. This smart spacer 1 works as follows: the sensor 4 measures at least one parameter of the parameters mentioned above. After that the sensor 4 provides the data which comprise information about the measured parameters to the data transmission unit 5. Furtheron, the data transmission unit 5 sends this provided data to an information system 6 which can be, for example, a personal computer located off-site or any central database where the data related to the overhead transmission line 3 are compiled, for further processing, such as storing the received data, matching them with other data etc.

Additionally the smart spacer 1 may comprise an energy storing unit 7, e.g. a battery and / or a capacitor, that provides energy for operating the sensor 4 and the data transmission unit 5. The energy storing unit 7 may be powered from the overhead transmission line 3. Moreover in the case the smart spacer 1 is adapted to be powered from the overhead transmission line 3 and in case of a power cut on the overhead transmission line 3, i.e. when there is no more energy for further smart spacer operation, the energy storing unit 7 located on the smart spacer 1 is adapted to provide enough energy to enable a transmission of data which comprises at least information about the power cut, wherein the information can include in the easiest case only one bit information consisting of zero in case of power cut.

The information about power cut may be received by different ways. The easiest way to receive the information about the power cut is when the sensor 4 is adapted to detect the power cut.

There may be other ways to detect the power cut. For example, in case the sensor 4 is powered from the overhead transmission line 3 it stops operating because of the power cut on the overhead transmission line. Therefore the data transmission unit 5 stops receiving data from the sensor 4. In this case the data transmission unit 5 may be adopted to send one bit information about the power cut to the information system 6.

Another way to detect the power cut may be in case the data transmission unit 5 is powered from the overhead transmission line and adapted to send at least one bit information consisting zero in case of power cut to the information system 6 as soon as it stops receiving power from the overhead transmission line.

In an ideal case, when the power cut has occurred, all data comprising the measured parameters and the data received from the others sensors 12 also are transmitted to the data receiver 6. The benefit of this feature is that no data will be lost in emergencies such a power cut.

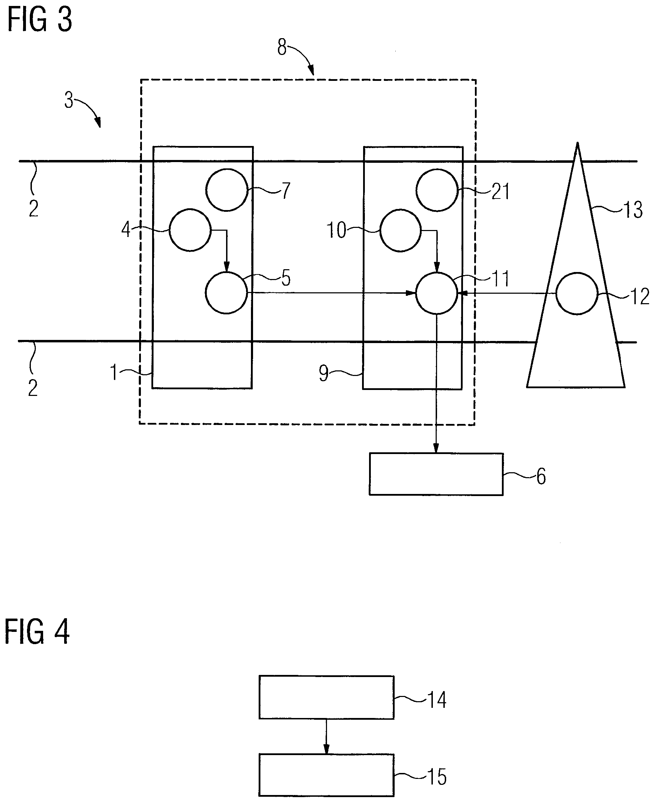

FIG 3 shows an enhanced embodiment of the system 8 of smart spacers 1 for the overhead transmission line 3 monitoring in which the system 8 comprises two smart spacers 1, 9 with sensors 4, 10 and the data transmission units 5, 11 placed on them, respectively. Both smart spacers 1, 9 work as the smart spacer 1 described with regard to FIG 2. Moreover among the smart spacers that are included into the system 8 at least one smart spacer is the slave smart spacer 1 and at least one smart spacer is a master smart spacer 9. Additionally the smart spacers may be equipped with the energy storing units 7, 21 that provide energy for operating the sensors 4, 10 and the data transmission units 5, 11 respectively.

The smart spacers 1, 9 are located in different places along the overhead transmission line 3. The typical distance between spacers is about 200 feet. The system 8 works as follows: The sensors 4, 10 enable measurement of parameters related to the condition of the overhead transmission line 3 in the place where they are located. After that, the sensors 4, 10 provide the data which comprise information about the measured parameters to their respective data transmission unit 5, 11. After that the data transmission unit 5 of the slave smart spacer 1 sends the provided data from the sensor 4 to the data transmission unit 11 that is located on the master smart spacer 9. In addition to that the data transmission unit 11 can receive data from another sensor 12 located for example on one of the typical towers 13 of the overhead transmission line 3. Further on, all data received by the transmission unit 11 of the master smart spacer 9 are transmitted to the information system 6 for further processing and evaluation of the condition of the overhead transmission line 3.

Also each smart spacer 1, 9 can comprise as many sensors as needed to provide the monitoring of the required parameters along the overhead transmission line. In the ideal case exhaustive information about the condition of the conductors 2 which includes conductor temperature, electrical current in the overhead transmission line 3, 3D mechanical oscillations of conductors 2, conductor sway and sag, conductor icing, air parameters around conductors 2 such as temperature and humidity are available in the information system 6.

In an enhanced embodiment, the system 7 can comprise as many smart spacers 1 as needed to provide accuracy of monitoring of the condition along the overhead transmission line 3, all of those smart spacers working as the smart spacers 1, 9 described with regard to FIGs 2, 3. The more smart spacers 1, 9 are used in the system 8, the more precisely the condition of the overhead transmission line can be described.

In case the system 8 comprises at least three smart spacers each of the smart spacers of such system 8 can be at the same time a slave smart spacer and a master smart spacer. Therefore the same smart spacer may be able to
receive the data from another sensors 12 and the measured data from the other slave smart spacer and
at the same time it may be able to forward all received data to the other master smart spacer and / or to the information system 6.

Such feature allows making transmitting the data along of plurality of the smart spacers in an optimal manner. I.e. the route of transmitting the data from the smart spacers along of plurality of the smart spacers to the information system 6 is dynamically defined based on availability of the smart spacers. All of those smart spacers are working as the smart spacers 1, 9 described with regard to FIGs 2, 3.

In all embodiments, data transmission between sensors 4, 10, 12 and the data transmission units 5, 11, and between the data transmission units 5, 11 and the information system 6 can be provided either via the overhead transmission line 3 or wirelessly and / or in combined way.

FIG 4 shows a flow diagram of an embodiment of a method for the overhead transmission line monitoring according to the present invention.

At step 14 at least one parameter of the condition of the overhead transmission line 3 is measured by the at least one sensor 4 of the smart spacer 1. The smart spacer 1 works as described with regard to FIG 1.

At step 15 the data provided by the sensor 4 that comprises the information about the measured parameter is evaluated to define the condition of the overhead transmission line 3.

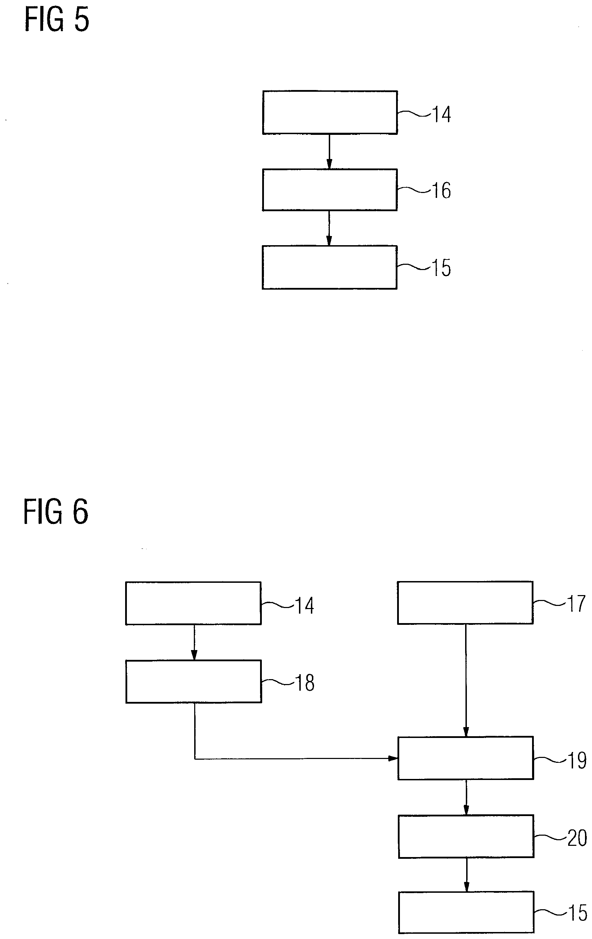

FIG 5 shows a flow diagram of a possible embodiment of the method for the overhead transmission line monitoring according to the present invention. Therein the overhead transmission line monitoring is provided by the smart spacer 1 that is equipped with the data transmission unit 5 in addition to the sensor 4 located on it. Therefore the method comprises an additional step 16 of transferring the measured data from the smart spacer 1 to the information system 6 that might be located for example on a personal computer or might be a central database where data related to the condition of the overhead transmission line 3 is compiled, further processed and evaluated. So the step 16 of transferring the measured data is performed between the step 14 of measuring the at least one parameter of a condition of the overhead transmission line 3 and the step 15 of evaluation of the measured data.

FIG 6 shows a flow diagram of an enhanced embodiment of the method for the overhead transmission line monitoring according to the present invention. Therein the overhead transmission line monitoring is provided by the system 8 of the smart spacers 1, 9 wherein the systems 8 works as described with regard to FIG 3.

At step 14 at least one parameter of the condition of the overhead transmission line 3 is measured by the system 8 of the smart spacers 1, 9 wherein at least one smart spacer of the system 8 is a slave smart spacer 1 and at least one smart spacer of the system 8 is a master smart spacer 9.

At step 18 the slave smart spacer 1 sends the data measured by its sensor 4 to the master smart spacer 9, in particular to the data transmission unit 11 of the master smart spacer 9.

At step 19 the master smart spacer 9 receives the data measured by the slave smart spacer 1 and the data measured by the other sensor 12 located for example on one of the typical towers 13 of the overhead transmission line 3.

At step 20 all data received by the master smart spacer 9 that includes the data measured by the slave smart spacer 1, the data measured by the other sensor 12, and the data measured by the master smart spacer 9 with means of its sensor 10, are transmitted by the master smart spacer 9 to the information system 6.

Further on at the step 15 the data transmitted by the master smart spacer 9 to the information system 6 are evaluated in the information system 6.

In case the system 8 contains at least three smart spacers the route of transmitting such data from the smart spacers to the information system 6 is dynamically defined based on availability of the smart spacers.

While the invention has been illustrated and described in detail with the help of preferred embodiment, the invention is not limited to the disclosed examples. Other variations can be deducted by those skilled in the art without leaving the scope of protection of the claimed invention.

### Reference numerals

1, 9 - smart spacer
2 - conductor
3 - overhead transmission line
4, 10, 12 - sensor
5, 11 - data transmission unit
6 - data receiver, information system
7, 21 - energy storing unit
8 - system of smart spacers
13 - tower
14 - 20 (method steps)

## Claims

1. A system comprising:
an overhead transmission line and a system of smart spacers for overhead transmission line monitoring comprising at least two smart spacers (1, 9)
wherein each smart spacer (1, 9) is adapted for bundling at least two conductors (2) of the overhead transmission line (3) and wherein each smart spacer comprises:
at least one sensor (4, 10) which is placed on the smart spacer (1, 9), suited for measuring at least one parameter of a condition of the overhead transmission line (3), and adapted to provide data, which comprises information about the measured parameter, each smart spacer further comprises
at least one data transmission unit (5, 11) adapted to receive the provided data from the at least one sensor (4, 10) and from other sensors (12), to send the provided data and data received from the other sensors (12) to a data receiver (6),
**characterized in that** each smart spacer further comprising: an energy storing unit (7) that provides energy for operating the at least one sensor (4) and the at least one data transmission unit (5),
wherein any electrical consumers located on each smart spacer (1) such as the data transmission unit (5, 11), the sensor (4, 10), the energy storing unit (7) is powered from the overhead transmission line (3),
wherein the energy storing unit (7) is adapted to provide enough energy to transmit at least data comprising information about a power cut,
wherein at least one smart spacer of the system of smart spacers (8) is a slave smart spacer (1) and at least one smart spacer of the system of smart spacers (8) is a master smart spacer (9),
wherein the slave smart spacer (1) is adapted to measure at least one parameter of a condition of the overhead transmission line (3) and to send data which comprises information about the measured parameter to the master smart spacer (9), and
wherein the master smart spacer (9) is adapted to measure at least one parameter of a condition of the overhead transmission line (3), to receive the data from the slave smart spacer (1), and to send the data which comprises information about the measured parameters and the data received from the slave smart spacer (1) to an information system (6).

2. A method for the overhead transmission line monitoring comprising:
a step of measuring (14) at least one parameter of the condition of the overhead transmission line (3) by a system of smart spacers (8) as per claim 1,
a step of sending (18) the data measured by the slave smart spacer (1) from the slave smart spacer (1) to the master smart spacer (9),
a step of receiving (19) the data provided by the slave smart spacer (1) at the master smart spacer (9),
a step of transmitting (20) the data provided by the sensor (10) located on the master smart spacer (9) and the data received from the slave smart spacer (1) from the master smart spacer (9) to an information system (6),
a step of evaluating (15) the measured data, and
a step of providing energy for operating the at least one sensor (4) and the at least one data transmission unit (5) by an energy storing unit (7), wherein any electrical consumers located on each smart spacer (1) such as the data transmission unit (5, 11), the sensor (4, 10), the energy storing unit (7) is powered from the overhead transmission line (3), and wherein the energy storing unit (7) is adapted to provide enough energy to transmit at least data comprising information about a power cut.

3. The method of claim 2, wherein
in the step of receiving (19) the data provided by the slave smart spacer (1), the master smart spacer (9) also receives data from other sensors (12), and
in the step of transmitting the data (20) the data received from the other sensors (12) by the master smart spacer (9) are also transmitted to the information system (6) .

4. The method of claim 2,
wherein the system of smart spacers (8) for the overhead transmission line monitoring comprises at least three smart spacers (1), and
wherein the route of transmitting the data from the smart spacers to the information system (6) is dynamically defined based on availability of the smart spacers.

## Patentansprüche

1. System, das Folgendes umfasst:
eine Überlandleitung und ein System mit intelligenten Abstandhaltern zur Überlandleitungsüberwachung, das mindestens zwei intelligente Abstandhalter (1, 9) umfasst,
wobei jeder intelligente Abstandhalter (1, 9) zum Bündeln von mindestens zwei Leitern (2) der Überlandleitung (3) ausgelegt ist und wobei jeder intelligente Abstandhalter Folgendes umfasst:
mindestens einen Sensor (4, 10), der an dem intelligenten Abstandhalter (1, 9) angeordnet ist und zum Messen mindestens eines Parameters für einen Zustand der Überlandleitung (3) geeignet ist und ausgelegt ist, Daten bereitzustellen, die Informationen über den gemessenen Parameter umfassen,
wobei jeder intelligente Abstandhalter ferner mindestens eine Datenübertragungseinheit (5, 11) umfasst, die ausgelegt ist, die von dem mindestens einen Sensor (4, 10) und von anderen Sensoren (12) bereitgestellten Daten zu empfangen und die bereitgestellten Daten und die Daten, die von den anderen Sensoren (12) empfangen werden, an einen Datenempfänger (6) zu senden,
**dadurch gekennzeichnet, dass** jeder intelligente Abstandhalter ferner Folgendes umfasst:
eine Energiespeichereinheit (7), die Energie zum Betreiben des mindestens einen Sensors (4) und der mindestens einen Datenübertragungseinheit (5) bereitstellt,
wobei alle elektrischen Verbraucher, die auf jedem intelligenten Abstandhalter (1) angeordnet sind, wie etwa die Datenübertragungseinheit (5, 11), der Sensor (4, 10), die Energiespeichereinheit (7) durch die Überlandleitung (3) mit Energie versorgt werden,
wobei die Energiespeichereinheit (7) ausgelegt ist, ausreichend Energie bereitzustellen, um zumindest Daten zu übertragen, die Informationen über eine Stromabschaltung umfassen,
wobei der mindestens eine intelligente Abstandhalter des Systems (8) mit intelligenten Abstandhaltern ein intelligenter Slave-Abstandhalter (1) ist und mindestens ein intelligenter Abstandhalter des Systems (8) mit intelligenten Abstandhaltern ein intelligenter Master-Abstandhalter (9) ist,
wobei der intelligente Slave-Abstandhalter (1) ausgelegt ist, mindestens einen Parameter für einen Zustand der Überlandleitung (3) zu messen und Daten, die Informationen über den gemessenen Parameter umfassen, an den intelligenten Master-Abstandhalter (9) zu senden, und
wobei der intelligente Master-Abstandhalter (9) ausgelegt ist, mindestens einen Parameter für einen Zustand der Überlandleitung (3) zu messen, die Daten vom intelligenten Slave-Abstandhalter (1) zu empfangen und die Daten, die Informationen über die gemessenen Parameter umfassen, und die Daten, die vom intelligenten Slave-Abstandhalter (1) empfangen werden, an ein Informationssystem (6) zu senden.

2. Verfahren für die Überlandleitungsüberwachung, das Folgendes umfasst:
einen Schritt des Messens (14) mindestens eines Parameters für den Zustand der Überlandleitung (3) durch ein System (8) mit intelligenten Abstandhaltern nach Anspruch 1,
einen Schritt des Sendens (18) der Daten, die durch den intelligenten Slave-Abstandhalter (1) gemessen werden, durch den intelligenten Slave-Abstandhalter (1) an den intelligenten Master-Abstandhalter (9),
einen Schritt des Empfangens (19) der Daten, die durch den intelligenten Slave-Abstandhalter (1) bereitgestellt werden, beim intelligenten Master-Abstandhalter (9),
einen Schritt des Übertragens (20) der Daten, die durch den Sensor (10) bereitgestellt werden, der auf dem intelligenten Master-Abstandhalter (9) angeordnet ist, und der Daten, die vom intelligenten Slave-Abstandhalter (1) empfangen werden, durch den intelligenten Master-Abstandhalter (9) an ein Informationssystem (6),
einen Schritt des Auswertens (15) der gemessenen Daten und
einen Schritt des Bereitstellens von Energie zum Betreiben des mindestens einen Sensors (4) und der mindestens einen Datenübertragungseinheit (5) durch eine Energiespeichereinheit (7), wobei alle elektrischen Verbraucher, die auf jedem intelligenten Abstandhalter (1) angeordnet sind, wie etwa die Datenübertragungseinheit (5, 11), der Sensor (4, 10), die Energiespeichereinheit (7) durch die Überlandleitung (3) mit Energie versorgt werden und wobei die Energiespeichereinheit (7) ausgelegt ist, ausreichend Energie bereitzustellen, um zumindest Daten zu übertragen, die Informationen über eine Stromabschaltung umfassen.

3. Verfahren nach Anspruch 2, wobei
in dem Schritt des Empfangens (19) der Daten, die durch den intelligenten Slave-Abstandhalter (1) bereitgestellt werden, der intelligente Master-Abstandhalter (9) außerdem Daten von anderen Sensoren (12) empfängt, und
in dem Schritt des Übertragens (20) der Daten die Daten, die durch den intelligenten Master-Abstandhalter (9) von den anderen Sensoren (12) empfangen werden, ebenfalls an das Informationssystem (6) übertragen werden.

4. Verfahren nach Anspruch 2,
wobei das System (8) mit intelligenten Abstandhaltern für die Überlandleitungsüberwachung mindestens drei intelligente Abstandhalter (1) umfasst, und
wobei der Übertragungsweg der Daten von den intelligenten Abstandhaltern zum Informationssystem (6) auf der Grundlage der Verfügbarkeit der intelligenten Abstandhalter dynamisch definiert ist.

## Revendications

1. Système comprenant :
une ligne de transmission aérienne et un système d'espaceurs intelligents pour contrôler la ligne de transmission aérienne comprenant au moins deux espaceurs (1, 9) intelligents,
dans lequel chaque espaceur (1, 9) intelligent est conçu pour mettre en faisceau au moins deux conducteurs (2) de la ligne (3) de transmission aérienne et dans lequel chaque espaceur intelligent comprend :
un moins un capteur (4, 10), qui est placé sur l'espaceur (1, 9) intelligent, qui convient pour mesurer au moins un paramètre d'un état de la ligne (3) de transmission aérienne et qui est conçu pour fournir une donnée, qui comprend de l'information sur le paramètre mesuré, chaque espaceur intelligent comprenant en outre
au moins une unité (5, 11) de transmission de données conçue pour recevoir la donnée fournie par le au moins un capteur (4, 10) et par d'autres capteurs (12), pour envoyer la donnée fournie et des données reçues des autres capteurs (12) à un récepteur (6) de données,
**caractérisé en ce que** chaque espaceur intelligent comprend en outre :
une unité (7) d'accumulation d'énergie, qui fournit de l'énergie pour faire fonctionner le au moins un capteur (4) et la au moins une unité (5) de transmission de données,
dans lequel tout consommateur électrique disposé sur chaque espaceur (1) intelligent, tel que l'unité (5, 11) de transmission de données, le capteur (4, 10), l'unité (7) d'accumulation d'énergie, est alimenté à partir de la ligne (3) de transmission aérienne,
dans lequel l'unité (7) d'accumulation d'énergie est conçue pour fournir suffisamment d'énergie pour transmettre au moins une donnée comprenant une information sur une coupure de courant,
dans lequel au moins un espaceur intelligent du système d'espaceurs (8) intelligents est un espaceur (1) intelligent esclave et au moins un espaceur intelligent du système d'espaceurs (8) intelligents est un espaceur (9) intelligent maître,
dans lequel au moins un espaceur (1) intelligent esclave est conçu pour mesurer au moins un paramètre d'un état de la ligne (3) de transmission aérienne et pour envoyer une donnée, qui comprend de l'information sur le paramètre mesuré à l'espaceur (9) intelligent maître, et
dans lequel l'espaceur (9) intelligent est conçu pour mesurer au moins un paramètre d'un état de la ligne (3) de transmission aérienne pour recevoir la donnée de l'espaceur (1) intelligent esclave et pour envoyer la donnée, qui comprend de l'information sur les paramètres mesurés, et la donnée, reçue de l'espaceur (1) intelligent esclave, à un système (6) d'information.

2. Procédé de contrôle d'une ligne de transmission aérienne comprenant :
un stade de mesure (14) d'au moins un paramètre de l'état de la ligne (3) de transmission aérienne par un système d'espaceurs (8) intelligents suivant la revendication 1,
un stade d'envoi (18) de la donnée mesurée par l'espaceur (1) intelligent esclave de l'espaceur (1) intelligent esclave à l'espaceur (9) intelligent maître,
un stade de réception (19) de la donnée fournie par l'espaceur (1) intelligent esclave, à l'espaceur (9) intelligent maître,
un stade de transmission (20) de la donnée, fournie par le capteur (10) disposé sur l'espaceur (9) intelligent maître, et de la donnée, reçue de l'espaceur (1) intelligent esclave, de l'espaceur (9) intelligent maître à un système (6) d'information,
un stade d'évaluation (15) de la donnée mesurée, et
un stade de fourniture d'énergie pour faire fonctionner le au moins un capteur (4) et la au moins une unité (5) de transmission de données par une unité (7) d'accumulation d'énergie, dans lequel tout consommateur électrique disposé sur chaque espaceur (1) intelligent, tel que l'unité (5, 11) de transmission de données, le capteur (4, 10), l'unité (7) d'accumulation d'énergie, est alimenté à partir de la ligne (3) de transmission aérienne, et dans lequel l'unité (7) d'accumulation d'énergie est conçue pour fournir suffisamment d'énergie pour transmettre au moins une donnée comprenant de l'information sur une coupure de courant.

3. Procédé suivant la revendication 2, dans lequel
dans le stade de réception (19) de la donnée, fournie par l'espaceur (1) intelligent esclave, l'espaceur (9) intelligent maître reçoit aussi une donnée d'autres capteurs (12), et
dans le stade de transmission de la donnée (20), les données reçues des autres capteurs (12) par l'espaceur (9) intelligent maître sont transmises aussi au système (6) d'information.

4. Procédé suivant la revendication 2,
dans lequel le système d'espaceurs (8) intelligents pour le contrôle de la ligne de transmission aérienne comprend au moins trois espaceurs (1) intelligents, et
dans lequel la voie de transmission des données des espaceurs intelligents au système (6) d'information est définie dynamiquement sur la base de la disponibilité des espaceurs intelligents.
